# EUROPÄISCHE PATENTSCHRIFT

(11) **EP 0 605 709 B1**
(45) Veröffentlichungstag und Bekanntmachung des Hinweises auf die Patenterteilung: **18.03.1998**
(21) Anmeldenummer: 93917526.1
(22) Anmeldetag: 06.08.1993
(51) Int. Cl.: B65F 1/14, B02C 18/40, B02C 23/08

(54) **ENTSORGUNGSVORRICHTUNG FÜR HAUSHALTSABFALL**
DISPOSAL DEVICE FOR HOUSEHOLD WASTE
DISPOSITIF D'ELIMINATION DE DECHETS MENAGERS

(30) Priorität: 06.08.1992 DE 9210518 U
(43) Veröffentlichungstag der Anmeldung: 13.07.1994
(73) Patentinhaber: Moser, Edeltraud, D-78713 Schramberg (DE)
(72) Erfinder: MOSER, Hermann, D-78713 Schramberg-Sulgen (DE)
(74) Vertreter: Goy, Wolfgang, Dipl.-Phys.
(86) Internationale Anmeldenummer: DE9300695
(87) Internationale Veröffentlichungsnummer: WO9403382

(56) Entgegenhaltungen:
- EP-A- 0 299 540
- WO-A-90/08714
- DE-U- 9 004 643
- GB-A- 2 256 391
- PATENT ABSTRACTS OF JAPAN vol. 012, no. 479 (C-552)14. Dezember 1988 & JP,A,63 194 791 (MASAHARU IKETO) 11. August 1988
- PATENT ABSTRACTS OF JAPAN vol. 010, no. 234 (M-507)6. September 1984 & JP,A,61 067 598 (WAKO SEISAKUSHO KK) 7. April 1986

## Beschreibung

Die Erfindung betrifft eine Vorrichtung zum Entsorgen von im Haushalt, insbesondere in der Küche anfallenden Abfallgegenständen aus Wertstoffen, insbesondere Kunststoff, Metall und dabei insbesondere Weißblech, Glas, etc., mit einem in einem Gehäuse, insbesondere in einem Möbelstück angeordneten Schredder zum direkten Zerkleinern der anfallenden Abfallgegenstände, wobei oberhalb des Schredders ein Einwurfschacht für das zu zerkleinemde Material angeordnet ist und wobei unterhalb des Schredders wenigstens ein Behälter für das zerkleinerte Material angeordnet ist.

Ein Problem in der heutigen Zeit besteht in den immer mehr werdenden Müllmengen, die im Haushalt anfallen. In erster Linie handelt es sich dabei um Plastikmüll, beispielsweise Joghurtbecher, Spülmittelflaschen etc., sowie um Weißbleche in Form von Dosen und Büchsen. Schließlich fallen noch Unmengen an Glas an, beispielsweise Marmeladengläser. Da es sich bei diesen Abfallgegenständen allesamt um Behälter für irgendwelche Lebensmittel handelt, nehmen diese im leeren Zustand naturgemäß ein großes Volumen ein. Demgemäß fallen täglich im Haushalt volumenmäßig gesehen gewaltige Mengen an Müll an, der jedoch aus Wertstoffen besteht, die grundsätzlich wiederverwendbar sind und somit einer Wiederverwertung zugeführt werden könnten. Es wird zwar heutzutage schon versucht, diese Wertstoffe dem Recycling zuzuführen, doch ist der Aufwand hierfür unvergleichlich hoch,und es ist noch keine hundertprozentige Lösung zur vernünftigen Entsorgung dieser Wertstoffe zustandegekommen.

In der JP 63 194 791 ist ein Schredder zum Entsorgen von Küchenabfällen der eingangs angegebenen Art offenbart. Dabei sieht die Vorrichtung vor, zunächst die Küchenabfälle in dem Schredder zu zerkleinem und anschließend in einer Presse zu komprimieren, um sie schließlich einem Abfallbehälter aufzugeben. Eine Trennung der Abfallgegenstände in einzelne Wertstoffe ist dabei nicht vorgesehen, d.h. sämtliche Abfallgegenstände werden "wild durcheinander" entsorgt. Es sind zwar zwei Abfallbehälter vorgesehen, doch sind diese lediglich jeweils den beiden Ausgängen der Presse zugeordnet.

In der WO 90/08714 ist der Gedanke offenbart, Haushaltsabfälle getrennt verschiedenen Abfallbehältern zuzuführen. Aus diesem Grunde ist unterhalb einer Einfüllöffnung eine Art Rutsche vorgesehen, unterhalb deren Ausgabeöffnung der jeweilige Abfallbehälter positioniert werden kann. Die Rutsche ist dabei karussellartig um eine senkrechte Achse drehbar, während die Abfallbehälter fest auf dem Boden stehen. Eine Zerkleinerung der Abfälle ist nicht vorgesehen.

Davon ausgehend,liegt der Erfindung die **Aufgabe** zugrunde, eine verbesserte Entsorgungsvorrichtung der eingangs angegebenen Art zu schaffen, die einerseits sicherer in der Handhabung ist und die andererseits eine bessere sowie hygienischere Entsorgung der Wertstoffe ermöglicht.

Als technische **Lösung** wird mit der Erfindung vorgeschlagen, daß der Einwurfschacht des Schredders einen oberen Abschlußdeckel aufweist, der im wesentlichen bündig mit der Oberseite des Gehäuses abschließt und der in Wirkverbindung mit einem Sensor dergestalt steht, daß ein Betrieb des Schredders nur bei geschlossenem Abschlußdeckel möglich ist, daß dem Schredder mehrere Behälter nachgeordnet sind, denen das zerkleinerte Material sortiert nach den jeweiligen Wertstoffsorten getrennt zuführbar ist, wozu unterhalb des Schredders in einem Verteilerschacht eine Verteileinrichtung zum sortierten Zuführen des zerkleinerten Materials in den jeweiligen Behälter vorgesehen ist, und daß eine Desinfektionseinrichtung zum Sterilisieren des zerkleinerten Materials vorgesehen ist.

Eine derartige Entsorgungsvorrichtung hat den Vorteil, daß sie zum einen sehr sicher arbeitet und daß zum anderen eine verbesserte Entsorgung möglich ist. Ein derartiger Küchenschredder für den im Haushalt anfallenden Müll aus Wertstoffen hat den Vorteil, daß der Wertstoff-Abfall direkt nach seinem Entstehen zerkleinert und gesammelt wird. Der große Vorteil liegt aber darin, daß mit der Zerkleinerung des Wertstoff-Mülls das Volumen größenordnungsmäßig um den Faktor 10 verringert werden kann und daß das zerkleinerte Material anschließend dem Recycling zugeführt werden kann, um so die Wertstoffe der Wiederverwertung zuzuführen. Die Grundidee besteht somit darin, daß die im Haushalt anfallenden Abfallgegenstände aus Wertstoffen gleich zur Volumenreduktion zerkleinert und entsprechend sortiert gesammelt werden, um sie anschließend der Wiederverwertung zuführen zu können. Insbesondere die Sortierung vereinfacht das Recycling der Wertstoffe beträchtlich. Mittels des erfindungsgemäßen Entsorgungsverfahrens werden die Nachteile bei den bekannten Entsorgungsverfahren behoben. Es wird mit der Erfindung nämlich vermieden, daß in einem material- und somit kostenaufwendigen Verfahren - und dies mit steigender Tendenz - vomehmlich in den Haushalten anfallende Wertstoffe, wie Hohlkörper aus Plastikbehältern, durch Müllentsorgungsunternehmen beispielsweise in Säcken eingesammelt und zu zentralen Sammel- und Sortieranlagen abtransportiert werden. Die unwirtschaftliche Entsorgung mit umfangreichen Fahrzeugparks und dafür notwendigem Personal wird mit dem erfindungsgemäßen Entsorgungsverfahren vermieden. Daß - wie bisher - zu 90% Luft transportiert wird, ist mit dem erfindungsgemäßen Entsorgungsverfahren kein Thema mehr. Gleichermaßen reduziert sich mit dem erfindungsgemäßen Entsorgungsverfahren der immer mehr steigende Kostenaufwand für den Müllabtransport, so daß die Haushalte spürbar entlastet werden. Auch wird mit dem erfindungsgemäßen Entsorgungsverfahren vermieden, daß eine Vielzahl von Arbeitskräften aus dem bisher eingesammelten Müll an Förderbändern die Wertstoffe heraussortiert. Die Grundidee des erfindungsgemäßen Entsorgungsverfahrens liegt somit dann, die Wertstoffe dort aufzubereiten, wo sie entstehen, nämlich in den Haushalten. Das Grundprinzip besteht dabei in Sortierung und Zerkleinerung der Wertstoffe. Insbesondere der Problemmüll "Kunststoff" kann damit aussortiert werden.

Die erfindungsgemäße Zerkleinerungsmaschine läßt sich ohne weiteres im Haushalt integrieren, da sie für Haushaltszwecke relativ klein dimensioniert werden kann. Die Zerkleinerungsvorrichtung kann dabei in bestehende Küchen eingebaut werden. Es ist aber auch denkbar, die Vorrichtung als Einzelgerät zu verwenden. Das Einbaugerät kann auf vielfältige Weise beispielsweise unter der Spültheke in idealer Weise plaziert werden. Denkbar ist jedoch auch jeder andere Ort, der sich je nach Gegebenheit anbietet. Das Einzelgerät kann an jedem beliebigen Ort stehend oder hängend angeordnet werden. Auch kann das Gerät extern angeordnet werden, wenn es darum geht, daß beispielsweise bei einem Mehrfamilienhaus der Zugang für mehrere Parteien gegeben sein muß. Vorzugsweise wird dieser Haushaltszerkleinerer aus Edelstahl sein. Der vorzugsweise aufklappbare Abschlußdeckel dient einerseits der Sicherheit, damit nicht unbeabsichtigt Gegenstände in den Schredder gelangen können, zum anderen dient der Abschlußdeckel als Geruchsabschluß und ist deshalb vorzugsweise mit einer Dichtung versehen. Indem der Abschlußdeckel des Schredders bündig mit der Oberseite des Gehäuses abschließt, kann der Abschlußdeckel ohne weiteres als Arbeitsfläche benutzt werden. Durch den Sensor ist der Betrieb des Schredders nur bei geschlossenem Abschlußdeckel möglich. Dies verhindert einen Zugriff in die laufende Maschine und dient somit der Sicherheit. Die Steuerung kann dabei derart sein, daß in dem Moment, wenn der Deckel geschlossen wird, sich der Schredder automatisch einschaltet und mit der Zerkleinerung des eingegebenen Gegenstandes beginnt. Wird der Deckel wieder geöffnet, wird der Schredder automatisch stillgesetzt. Der Schredder besitzt dabei vorzugsweise einzeln austauschbare Schneidmesser.

Indem erfindungsgemäß dem Schredder mehrere Behälter nachgeordnet sind, bringt dies den Vorteil mit sich, daß mit dem Küchenschredder nicht nur eine einzige Wertstoffsorte zerkleinert werden kann, um sie dem Recycling zuzuführen, sondem daß mit dem Küchenschredder entsprechend der Anzahl der Behälter eine entsprechende Anzahl von Wertstoffen zunächst zerkleinert und anschließend dem jeweiligen Behälter zugeführt werden können. In erster Linie wird es sich bei den Wertstoffsorten um Kunststoff sowie um Metall handeln, so daß zwei Behälter vorzusehen sind. Die Zugehörigkeit des jeweils zu zerkleinemden Mülls wird vor dem Zerkleinerungsvorgang beispielsweise durch Betätigen einer Wahltaste vorbestimmt, und zwar welchem Behälter das zerkleinerte Material zugeführt werden soll. Entsprechend wird dann das zerkleinerte Material in einen von mehreren unterhalb des Schredders angeordneten Behälter weitergeleitet, so daß in den jeweiligen Behältern die notwendige Sortenreinheit für das Recycling gewährleistet ist.

Indem weiterhin erfindungsgemäß eine Desinfektionseinrichtung zum Sterilisieren des zerkleinerten Materials vorgesehen ist, wird dadurch die Entstehung von Bakterien in den Behältern durch das verschmutzte Zerkleinerungsmaterial vermieden. Bei der Desinfektionseinrichtung kann es sich um eine Sprüheinrichtung handeln, welche vorzugsweise dann automatisch betätigt wird, wenn der Schredder in Gang gesetzt wird, so daß gleich bei der Entstehung und Zuführung des zerkleinerten Materials in den Behälter eine Keimabtötung stattfindet. Somit können auch ungereinigte Abfallgegenstände in den Schredder gegeben werden, ohne daß dadurch Hygieneprobleme entstehen. Somit wird auch bei einer relativ langen Einlagerungsdauer eine Geruchsbildung im Behälter vermieden. Das Desinfektionsmittel kann handelsüblichen Normen entsprechen, also auch mit beliebigen Duftnoten versetzt sein. Dadurch wird als angenehmer Nebeneffekt das Küchenklima verbessert.

Die Behälter können aus hartem Kunststoff bestehen und sind säurebeständig. Sie können aber auch aus Edelstahl bestehen. Sie sind so zu gestalten, daß sie konfektionierte Einwegsäcke mit Schnellverschluß und entsprechenden Aufnahmeleisten aufnehmen können, die bei erreichtem Füllstand einfach herausgenommen, verschlossen und danach dem Entsorger bereitgestellt werden. Über diesen Sack können beim Erwerb auf einem geeigneten Vertriebsweg die Entsorgungsgebühren erhoben werden. Der Vorteil dieser Idee liegt darin, daß jeder nur noch so viel bezahlt, wie er tatsächlich abliefert. Die mehrfarbigen Entsorgungssäcke erleichtem dem Entsorger die Zuordnung der Wertstoffe.

Vorzugsweise ist der Schredder unter der Spültheke in der Küche angeordnet. Der Küchenschredder findet also vorzugsweise dort seinen Platz, wo schon der Abfallbehälter üblicherweise seinen Platz hat. Dies bringt den Vorteil mit sich, daß der Müll dort gleich zerkleinert und gesammelt wird, wo er entsteht. Die Spültheke weist dabei genügend Platz auf, um den Küchenschredder unterbringen zu können, da er nicht viel mehr Platz einnimmt als beispielsweise eine Spülmaschine. Der Küchenschredder erhält somit in der Küche einen selbstverständlichen Platz, wie er bereits von der Spülmaschine, Waschmaschine, von dem Herd sowie von anderen integrierten Haushaltsgeräten eingenommen wird. In der modernen Einbauküche bietet sich deshalb hierfür der Platz unter der Spültheke an.

Vorzugsweise weist der Schredder zwei gegenläufige Schneidwellen auf. Dies stellt ein bewährtes Grundprinzip eines derartigen Schredders dar, mit dem auf einfache Weise Kunststoff, Weißblech oder Glas zerkleinert werden kann.

Für eine konstruktive Ausbildung der Verteileinrichtung wird vorgeschlagen, daß diese eine verschwenkbare Klappe aufweist. Dies stellt eine technisch einfache Möglichkeit zur Zuordnung des zerkleinerten Materials in den jeweiligen Behälter dar, wobei die Verteilerklappe zugleich auch als Rutsche dienen kann, um das zerkleinerte Material in den jeweiligen Behälter zu leiten.

In einer weiteren Weiterbildung wird schließlich vorgeschlagen, daß die Behälter auf Rollschienen unter dem Schredder herausziehbar sind. Die Rollschienen bilden somit ein Aufhängungssystem für die Abfallbehälter, wobei die Rollen ein bequemes Herausfahren und Entnehmen der Behälter ermöglichen.

Ein Ausführungsbeispiel einer erfindungsgemäßen Entsorgungsvorrichtung wird nachfolgend anhand der Zeichnungen beschrieben. In diesen zeigt:
- Fig. 1: eine schematische Ansicht der Entsorgungsvorrichtung, wie sie in einer Spültheke einer modernen Einbauküche integriert ist;
- Fig. 2: eine Seitenansicht der Entsorgungsvorrichtung in Fig. 1 für sich alleine;
- Fig. 3: eine Vorderansicht der Entsorgungsvorrichtung in Fig. 2.

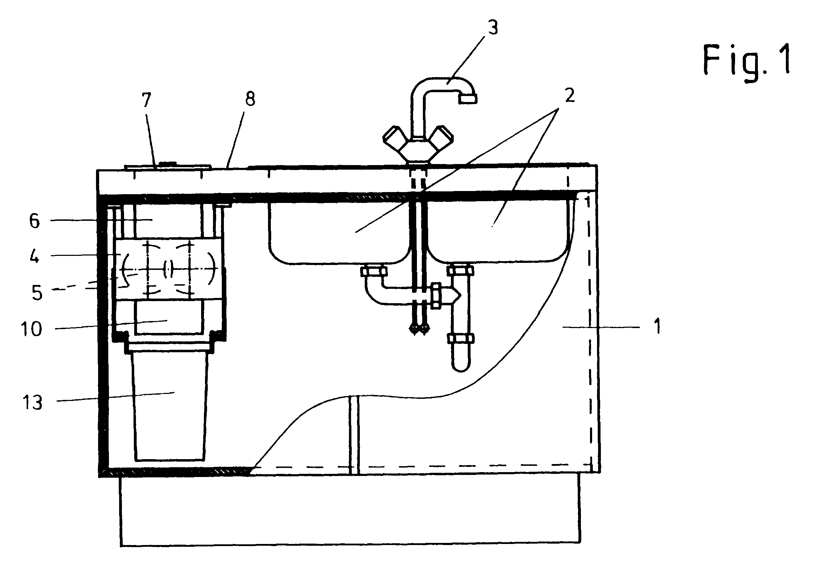

In Fig. 1 ist eine Spültheke 1 einer modemen Einbauküche zu erkennen. Dabei befinden sich rechts die beiden Spülbecken 2 mit den zugehörigen Armaturen 3. Auf der linken Seite ist in der Spültheke 1 ein Schredder 4 integriert, der den im Haushalt anfallenden Wertstoffmüll zerkleinem und sammeln soll, wie nachfolgend noch näher auszuführen sein wird.

Der Schredder 4 weist zwei gegenläufige Schneidwellen 5 auf, wie man sie von Schreddem her kennt und wie sie in anderen Bereichen eingesetzt werden. Vom Grundaufbau her kann der Schredder 4 mit seinen Schneidwellen 5 demjenigen Schredder entsprechen, wie er in dem deutschen Gebrauchsmuster G 91 08 230.7 beschrieben ist.

Oberhalb des Schredders 4, welcher im übrigen aus Edelstahl bestehen kann, befindet sich ein Einwurfschacht 6 aus rostfreiem Stahl. Dieser Einwurfschacht 6 weist oberseitig einen Abschlußdeckel 7 auf, welcher - wie in Fig. 1 erkennbar ist - bündig mit der Oberseite 8 der Spültheke 1 abschließt und deshalb als Arbeitsfläche dienen kann. Im Wirkungsbereich des Abschlußdeckels 7, welcher ebenfalls aus rostfreiem Stahl bestehen kann und welcher gegenüber dem Einwurfschacht 6 mittels einer Gummidichtung abgedichtet ist, steht ein Sensor 9, der dann betätigt wird, wenn der Abschlußdeckel 7 geöffnet und geschlossen wird.

Unterhalb des Schredders 4 befindet sich ein Verteilerschacht 10 ebenfalls aus rostfreiem Stahl. Dieser Verteilerschacht 10 erweitert sich nach unten hin glockenförmig und weist eine Verteileinrichtung 11 auf. Diese wird durch eine um eine horizontale Achse A verschwenkbare Klappe 12 gebildet.

Schließlich befinden sich unterhalb des Verteilerschachtes 10 zwei Behälter 13. Diese sind auf Rollschienen 14 gelagert und ermöglichen ein bequemes Herausfahren und Entnehmen der Behälter 13.

Die von ihrem konstruktiven Aufbau her zuvor beschriebene Entsorgungsvorrichtung funktioniert wie folgt:

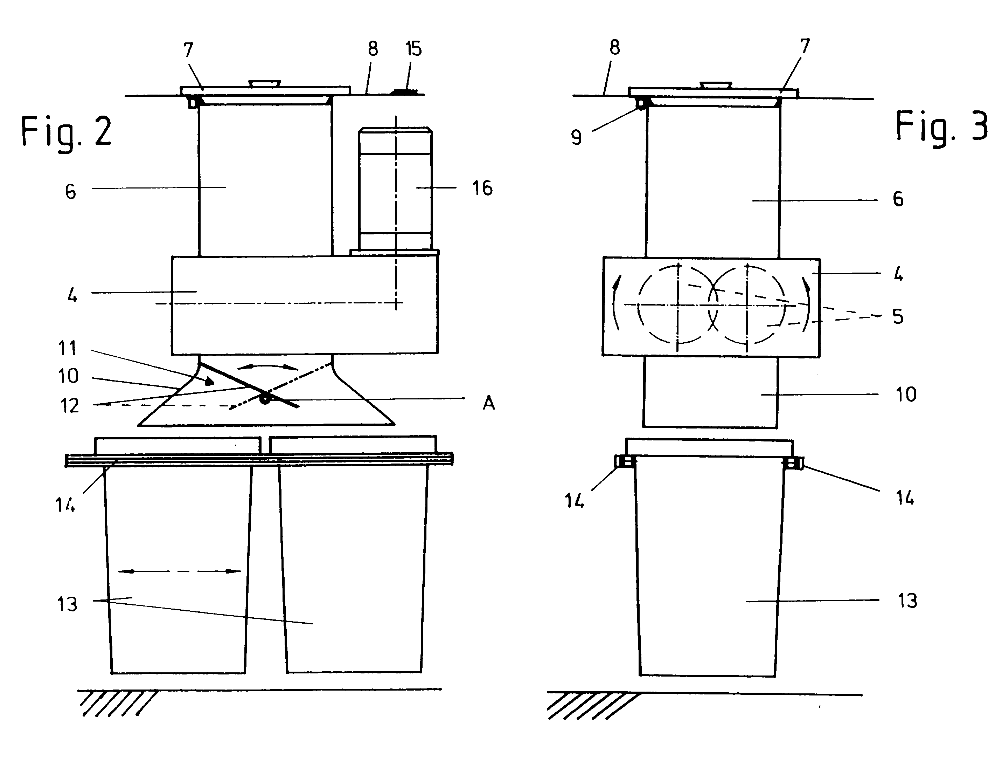

Wenn im Haushalt ein Abfallgegenstand aus einem Wertstoff, beispielsweise ein Joghurtbecher aus Kunststoff oder eine Weißblechdose, anfällt, wird zunächst mittels einer an der Oberseite 8 der Spültheke 1 angeordnete Wahltaste 15 die entsprechende Wertstoffsorte eingestellt, also in dem Ausführungsbeispiel entweder Kunststoff oder Weißblech. Durch Betätigen der Wahltaste 15 wird die Klappe 12 der Verteileinrichtung 11 entsprechend verstellt, so daß das zerkleinerte Material entweder in den Behälter 13 für Kunststoff oder in den Behälter für Weißblech geleitet wird. Die beiden entsprechenden Stellungen der Klappe 12 sind in Fig. 2 dargestellt (mit einer durchgehenden sowie mit einer strichpunktierten Linie).

Nachdem somit zunächst die Art des zu entsorgenden Wertstoffes durch Betätigen der Wahltaste 15 vorbestimmt worden ist, wird anschließend der Abschlußdeckel 7 geöffnet. Da dieser Abschlußdeckel 7 in Wechselwirkung mit dem Sensor 9 steht, wird der Antrieb der beiden Schneidwellen 5 des Schredders 4 auf jeden Fall unterbrochen und der Motor 16 stillgesetzt, der sich neben dem Einwurfschacht 6 nach oben hin erstreckend befindet. Durch den geöffneten Abschlußdeckel 7 kann dann der entsprechende Abfallgegenstand in den Einwurfschacht 6 geworfen werden. Der Abschlußdeckel 7 wird anschließend geschlossen. Da der Sensor 9 die geschlossene Stellung des Abschlußdeckels 7 erkennt, werden automatisch die Schneidwellen 5 in Betrieb gesetzt, indem diese langsam gegeneinander laufen, wie dies in Fig. 3 angedeutet ist. Das zerkleinerte Material fällt nach unten auf die Klappe 12 und rutscht in den entsprechenden Behälter 13. Nach einer bestimmten Zeit kann dann der Schredder 4 automatisch abgestellt werden. Nicht dargestellt ist eine Desinfektionsautomation, welche immer dann automatisch in Gang gesetzt wird, wenn der Schredder 4 in Gang gesetzt und Material zerkleinert wird, wobei die Desinfektionseinrichtung Bakterien innerhalb der beiden Behälter 13 abtötet und die Entstehung weiterer Bakterien verhindert.

Sobald einer der beiden Behälter 13 voll ist, kann er auf den Rollschienen 14 herausgefahren werden, um das darin enthaltene sortenreine, zerkleinerte Material der Wiederverwertung zuzuführen.

Wenn beim Betrieb des Schredders 4, wenn also die Schneidwellen 5 noch umlaufen, der Abschlußdeckel 7 geöffnet wird, bringen die Sensoren 9 den Schredder 4 automatisch zum Stillstand.

## Patentansprüche

1. Vorrichtung zum Entsorgen von im Haushalt, insbesondere in der Küche anfallenden Abfallgegenständen aus Wertstoffen, insbesondere Kunststoff, Metall und dabei insbesondere Weißblech, Glas etc.,
mit einem in einem Gehäuse, insbesondere in einem Möbelstück angeordneten Schredder (4) zum direkten Zerkleinern der anfallenden Abfallgegenstände, wobei oberhalb des Schredders (4) ein Einwurfschacht (6) für das zu zerkleinernde Material angeordnet ist und wobei unterhalb des Schredders (4) wenigstens ein Behälter (13) für das zerkleinerte Material angeordnet ist,
**dadurch gekennzeichnet,**
daß der Einwurfschacht (6) des Schredders (4) einen oberen Abschlußdeckel (7) aufweist, der im wesentlichen bündig mit der Oberseite (8) des Gehäuses abschließt und der in Wirkverbindung mit einem Sensor (9) dergestalt steht, daß ein Betrieb des Schredders (4) nur bei geschlossenem Abschlußdeckel (7) möglich ist,
daß dem Schredder (4) mehrere Behälter (13) nachgeordnet sind, denen das zerkleinerte Material sortiert nach den jeweiligen Wertstoffsorten getrennt zuführbar ist, wozu unterhalb des Schredders (4) in einem Verteilerschacht (10) eine Verteileinrichtung (11) zum sortierten Zuführen des zerkleinerten Materials in den jeweiligen Behälter (13) vorgesehen ist, und
daß eine Desinfektionseinrichtung zum Sterilisieren des zerkleinerten Materials vorgesehen ist.

2. Vorrichtung nach dem vorhergehenden Anspruch,
dadurch gekennzeichnet,
daß der Schredder (4) unter der Spültheke (1) in der Küche angeordnet ist.

3. Vorrichtung nach einem der vorhergehenden Ansprüche,
dadurch gekennzeichnet,
daß der Schredder (4) zwei gegenläufige Schneidwellen (5) aufweist.

4. Vorrichtung nach einem der vorhergehenden Ansprüche,
dadurch gekennzeichnet,
daß die Verteileinrichtung (11) eine verschwenkbare Klappe (12) aufweist.

5. Vorrichtung nach einem der vorhergehenden Ansprüche,
dadurch gekennzeichnet,
daß die Behälter (13) auf Rollschienen (14) unter dem Schredder (4) herausziehbar sind.

## Claims

1. Device for disposal of domestic waste, in particular waste occurring in the kitchen, of useful materials, in particular plastic, metal, and in particular tin, glass etc.,
with a shredder (4) arranged in a housing, in particular in a piece of furniture, for direct shredding of the waste occurring, where above the shredder (4) is an inlet shaft (6) for the material to be shredded and below the shredder (4) is arranged at least one container (13) for the shredded material,
characterized in that
the inlet shaft (6) of the shredder (4) has an upper lid (7) which closes essentially flush with the top (8) of the housing and which is actively connected to a sensor (9) such that operation of the shredder (4) is possible only with the lid (7) closed,
that after the shredder (4) are arranged several containers (13) into which the shredded material can be guided separated by the type of material concerned, where below the shredder (4) is arranged in a distribution shaft (10) a distribution device (11) for the sorted feed of the shredded material to the container (13) concerned, and
that a disinfection device is provided for sterilization of the shredded material.

2. Device according to the previous claim
characterized in that
the shredder (4) is arranged under the sink unit (1) in the kitchen.

3. Device according to any of the previous claims
characterized in that
the shredder (4) has two cutting shafts (5) running in opposite directions.

4. Device according to any of the previous claims
characterized in that
the distribution device (11) has a hinged flap (12).

5. Device according to any of the previous claims
characterized in that
the containers (13) can be drawn out on roller rails (14) below the shredder (4).

## Revendications

1. Dispositif pour l'élimination de déchets produits à la maison, notamment dans la cuisine, en des matières telles que, notamment, de la matière plastique, du métal et, plus particulièrement du fer blanc, du verre, etc.,
ce dispositif comportant un déchiqueteur (4), placé dans un élément formant logement, notamment dans un meuble, pour la fragmentation et le broyage directs des déchets produits, un conduit vertical d'introduction (6) pour les matières à broyer étant prévu au-dessus du déchiqueteur (4) tandis qu'au moins un récipient (13) pour les matières broyées est disposé au-dessous du déchiqueteur (4),
caractérisé en ce que
le conduit vertical d'introduction (6) du déchiqueteur (4) présente un couvercle supérieur de fermeture (7), qui se ferme sensiblement au même niveau que la face supérieure (8) de l'élément formant logement et dont le fonctionnement est associé à un détecteur (9), de telle manière que le déchiqueteur (4) ne puisse fonctionner que lorsque le couvercle de fermeture (7) est fermé,
en ce que plusieurs récipients (13) sont placés à la suite du déchiqueteur (4) et peuvent recevoir séparément les matières broyées, triées en fonction des diverses sortes de matériaux, un dispositif de répartition (11) étant prévu à cet effet au-dessous du déchiqueteur (4), dans un conduit vertical de distribution (10), pour acheminer, de manière triée, les matières broyées vers les récipients (13) correspondants, et
en ce qu'il est prévu un dispositif de désinfection pour la stérilisation des matières broyées.

2. Dispositif selon la revendication précédente,
caractérisé en ce que
le déchiqueteur (4) est placé sous le bloc-évier (1) dans la cuisine.

3. Dispositif selon l'une des revendications précédentes,
caractérisé en ce que
le déchiqueteur (4) présente deux arbres de coupe (5) à mouvements contraires.

4. Dispositif selon l'une des revendications précédentes,
caractérisé en ce que
le dispositif de répartition (11) présente une trappe obturatrice (12) rabattante.

5. Dispositif selon l'une des revendications précédentes,
caractérisé en ce que
les récipients (13) peuvent être retirés du dessous du déchiqueteur (4) au moyen de rails de roulement (14).
